# EUROPEAN PATENT APPLICATION

(11) **EP 4 415 210 A1**
(43) Date of publication of application: **14.08.2024**
(21) Application number: 24150425.7
(22) Date of filing: 04.01.2024
(51) Int. Cl.: H02J 7/00

(54) **POWER STORAGE APPARATUS**

(30) Priority: 04.01.2023 CN 202310008924
(71) Applicant: Kehua Data Co., Ltd, 361000 Xiamen Fujian (CN)
(72) Inventor: LIU, Zhao, FUJIAN 361000 (CN); PENG, Qianqian, FUJIAN 361000 (CN); YI, Longqiang, FUJIAN 361000 (CN)
(74) Representative: Regimbeau

(57) **Abstract**

A power storage apparatus includes a first power storage unit, a second power storage unit, a resonant circuit, a first switch, a second switch, a third switch and a fourth switch. The first end of the first switch is coupled to a first end of the first power storage unit. The second end of the first switch is coupled to a first end of the second switch and is coupled to a first end of the resonant circuit. The second end of the second switch is coupled to a second end of the first power storage unit and is coupled to a first end of the second power storage unit. The first end of the third switch is coupled to the first end of the second power storage unit and is coupled to the second end of the second switch.

## Description

### TECHNICAL FIELD

The present invention is related to a power storage apparatus, and more particularly related to a power storage apparatus with an adaptive control method.

### BACKGROUND

The importance of battery systems in today's industry and innovation cannot be overstated. As the world becomes increasingly reliant on technology, the need for efficient and reliable power sources has become paramount. Battery systems serve as the backbone for a multitude of applications, ranging from consumer electronics to large-scale industrial machinery. The evolution of portable electronics has been particularly dependent on advancements in battery technology. Devices such as smartphones, laptops, and tablets have become ubiquitous, and their functionality is heavily reliant on the longevity and efficiency of their batteries.

In the automotive sector, the shift towards electric vehicles (EVs) represents a significant step in the global effort to reduce carbon emissions and combat climate change. This transition is heavily reliant on the development of advanced battery systems that can provide long ranges and quick charging times, akin to the convenience offered by traditional fossil fuel-powered vehicles. As such, the battery industry plays a crucial role in the broader context of sustainable development and environmental conservation.

Robotics is another field where battery systems have an indispensable role. From industrial automation to service robots in healthcare and domestic settings, the efficiency and reliability of battery systems directly impact the performance and practicality of robotic technology. The ability to store and efficiently use power determines the autonomy and effectiveness of robots in various applications, making battery technology a focal point of innovation in this sector.

The integration of battery systems in renewable energy setups, such as solar and wind power installations, marks a significant stride in the shift towards sustainable energy sources. Batteries' ability to store excess energy generated during peak conditions and release it during demand spikes or low generation periods is crucial in stabilizing power grids and making renewable energy more reliable and consistent.

However, developing effective battery power systems is a complex challenge that involves intricate chemical and electrical engineering. The process of designing and manufacturing batteries involves a delicate balance of chemical components and reactions. These chemical processes must be carefully controlled and managed to ensure safety, longevity, and efficiency.

The complexity of battery systems is further compounded by the need to consider numerous parameters and variables. Factors such as energy density, charge/discharge rates, temperature sensitivity, and lifecycle must be meticulously balanced to meet the specific requirements of different applications. This complexity makes battery technology one of the most challenging and technically demanding areas in modem engineering.

In the realm of consumer electronics, the drive to make devices smaller, lighter, and more powerful puts additional pressure on battery manufacturers. There is a constant demand for batteries that are compact yet capable of holding more power and recharging faster. This has spurred significant research and development efforts in the field, leading to innovations such as lithium-ion batteries and, more recently, solid-state batteries.

For electric vehicles, the challenges are even more pronounced. EV batteries must be capable of storing large amounts of energy to ensure adequate driving ranges. They also need to be extremely reliable and safe, as they are a crucial component of the vehicle's overall functionality. The development of EV batteries thus involves not only chemical and electrical engineering expertise but also significant considerations regarding safety, cost, and environmental impact.

In the context of renewable energy, battery systems are required to be highly efficient and durable. They need to withstand the cyclical nature of energy generation and consumption, which can put considerable strain on battery systems. The development of batteries for this sector often focuses on maximizing lifespan and efficiency while keeping costs manageable.

The integration of battery technology into various sectors and applications has led to a surge in demand for skilled professionals and researchers in this field. The industry faces the dual challenge of advancing battery technology to meet growing demands while also ensuring that these advancements are sustainable and environmentally friendly. This has led to a dynamic and constantly evolving landscape in battery research and development, making it a critical area of focus in modem science and engineering.

Battery technology not only powers devices but also plays a pivotal role in energy independence and security. As nations seek to reduce reliance on imported fossil fuels, batteries become key in storing energy from domestic renewable sources. This not only enhances national energy security but also contributes to economic stability by mitigating the impacts of fluctuating global oil prices.

The field of medical devices and healthcare has also seen a significant impact from advancements in battery technology. Medical devices, ranging from portable monitors to life-saving equipment like pacemakers, rely on batteries that are reliable, safe, and long-lasting. The development of miniature, yet powerful, batteries has enabled a new generation of medical devices that improve patient mobility and quality of life.

In telecommunications and networking, battery systems ensure continuity of service, particularly in remote or unstable power environments. As the world becomes more interconnected, the reliability of communication systems increasingly depends on the resilience of the underlying battery technology to provide uninterrupted service, especially in emergency or disaster scenarios.

Battery systems are also at the forefront of addressing climate change. By enabling the storage and effective use of renewable energy, batteries help reduce dependence on carbon-intensive energy sources. This shift is crucial in mitigating the impacts of climate change, as it allows for a more sustainable and environmentally friendly approach to energy consumption.

In the aerospace industry, the demands on battery systems are particularly high. Batteries used in spacecraft and satellites must operate reliably over long periods, often in extreme environmental conditions. The development of batteries for these applications pushes the limits of current technology, requiring innovations that can withstand the rigors of space travel and the harsh conditions of extraterrestrial environments.

Consumer demand for sustainable and eco-friendly products has further spurred innovation in battery technology. As awareness of environmental issues grows, consumers are increasingly seeking products that have a minimal carbon footprint. This trend is driving the development of batteries that are not only efficient and powerful but also made from sustainable or recyclable materials.

The evolution of smart cities and the Internet of Things (IoT) has created a new frontier for battery technology. As cities become smarter and more connected, the need for small, efficient, and long-lasting batteries to power sensors and devices has become crucial. These batteries are essential in enabling the continuous collection and transmission of data that drives the smart city infrastructure.

In the field of energy grid management, the role of batteries is becoming increasingly important. Batteries are used to balance loads, store excess energy, and provide backup power. This not only enhances the efficiency and reliability of the grid but also allows for the integration of more renewable energy sources, which tend to be intermittent in nature.

Battery technology is also a key enabler of technological democratization. As batteries become more affordable and accessible, they empower communities in remote or underdeveloped areas by providing access to electricity. This access is vital for education, healthcare, and economic development, and it plays a crucial role in reducing global inequalities.

The challenges in developing effective battery systems are substantial, but they are matched by the immense potential benefits. As battery technology continues to advance, it paves the way for a future that is more connected, sustainable, and resilient. The ongoing research and development in this field are not just about creating better batteries; it's about enabling a new era of technological innovation and environmental stewardship that will define the coming decades.

The modular design of power storage systems offers a significant advantage in terms of flexibility and customization. By dividing the system into modules, each with its own enclosure, housing, and associated circuits, manufacturers can more easily tailor power storage solutions to meet diverse product requirements. This modular approach allows for the scaling of power storage capacity and voltage levels to suit different applications, ranging from small consumer electronics to large industrial machinery.

Each module in a modular power storage system can be designed to operate as a self-contained unit, complete with its own management and protection circuits. This enables easier maintenance and replacement, as individual modules can be serviced or swapped out without affecting the entire system. Additionally, modular designs facilitate upgrades, as new modules with improved technology can be integrated into existing systems without the need for a complete overhaul.

However, the use of multiple modules in a power storage system introduces complexity, particularly in terms of the interactions between these modules. When multiple power storage units, such as battery modules, are combined, their performance can be influenced by the state and behavior of the other modules in the system. This interaction requires careful management to ensure that the modules operate harmoniously and efficiently.

One key challenge in modular power systems is maintaining balance across the modules. Differences in state of charge, aging, and temperature among modules can lead to imbalances, which can decrease overall system efficiency. If not properly managed, some modules may end up overworked or underutilized, leading to reduced system performance and potentially shorter overall lifespan.

The goal is to have the modules work together synergistically, where the strengths of one module complement the weaknesses of another. Achieving this requires sophisticated control systems capable of monitoring and adjusting the operation of each module in real-time. These systems must take into account various parameters such as voltage, current, temperature, and state of charge to optimize the performance of the entire system.

Without careful organization and control, the interaction between multiple power storage units can lead to a phenomenon where one or more modules become a drag on the system, negatively impacting the overall efficiency. This is particularly problematic in applications where consistent and reliable power delivery is critical, such as in medical devices or transportation systems.

In worst-case scenarios, poor management of modular power storage systems can lead to safety hazards. An unstable power supply not only risks damaging electronic components but can also pose a risk to human safety. In critical applications, such as in life-support systems or high-power industrial equipment, the failure of a power storage system can have dire consequences.

The lifespan of the individual battery modules and the overall system can be dramatically affected by how well the modules interact. Poorly coordinated modules can lead to accelerated degradation of some units, reducing the effectiveness and longevity of the system. This necessitates more frequent maintenance and replacements, increasing the operational costs.

Therefore, the design and implementation of modular power storage systems must prioritize the interaction among multiple units. It is essential to develop advanced battery management systems (BMS) that can intelligently control and balance the load among the modules. These systems must be capable of real-time monitoring and rapid response to changes in the operating conditions of each module.

In conclusion, while modular design offers flexibility and scalability in power storage systems, it also brings challenges in ensuring efficient and safe operation. The interaction among multiple power storage units necessitates sophisticated control mechanisms to ensure that the modules work together effectively, without compromising power efficiency, safety, or the longevity of the system. Addressing these challenges is crucial for the continued advancement and reliability of modular power storage technologies.

### SUMMARY

In some embodiments, a power storage apparatus includes a first power storage unit, a second power storage unit, a resonant circuit, a first switch, a second switch, a third switch and a fourth switch.

The first end of the first switch is coupled to a first end of the first power storage unit.

The second end of the first switch is coupled to a first end of the second switch and is coupled to a first end of the resonant circuit.

The second end of the second switch is coupled to a second end of the first power storage unit and is coupled to a first end of the second power storage unit.

The first end of the third switch is coupled to the first end of the second power storage unit and is coupled to the second end of the second switch.

A second end of the third switch is coupled to a first end of the fourth switch and is coupled to a second end of the resonant circuit.

The second end of the fourth switch is coupled to a second end of the second power storage unit.

In some embodiments, the first power storage and the second power storage are capacitors.

In some embodiments, the first switch, the second switch, the third switch, the fourth switch and the resonant circuit are used for balancing a voltage difference between the first power storage unit and the second power storage unit.

In some embodiments, the power storage apparatus may also include a control module.

The control module adjusts a switching frequency set of the first switch, the second switch, the third switch and the fourth switch according to a resonant frequency of the resonant circuit.

In some embodiments, the control module controls duty ratios of the first switch and the second switch as 50%.

The control module controls duty ratios of the third switch and the fourth switch as 50%.

In some embodiments, the control module samples a resonant current when a switch signal of one of the first switch, the second switch, the third switch and the fourth switch is triggered as a first current.

The control module further samples another resonant current when the switch signal of one of the first switch, the second switch, the third switch and the fourth switch after a predetermined time period after the switch signal is triggered as the second current.

The control module calculators a frequency compensation value by comparing the first current and the second current.

The frequency compensation value is used for adjust the switch frequency set of the first switch, the second switch, the third switch and the fourth switch.

In some embodiments, the control module further subtracts the second current with the first current to get a sign of a current offset and multiplies the first current with the sign to obtain a target current.

The target current is supplied to a PI controller to get the frequency compensation value.

In some embodiments, a sampling circuit is coupled between the first power storage unit and the second power storage unit for sampling the first current and the second current.

In some embodiments, the resonant circuit includes a resonant inductor and a resonant capacitor.

A first end of the resonant inductor is coupled to the first end of the resonant circuit.

A second end of the resonant inductor is coupled to a first end of the resonant capacitor.

A second end of the resonant capacitor is coupled to the second end of the resonant circuit.

In some embodiments, the resonant inductor and the resonant capacitor are used for generating the resonant frequency of the resonant circuit.

In some embodiments, the first power storage unit and the second power storage unit are included in multiple power storage units.

When the first power storage unit performs a charging, the second power storage unit performs a discharging to decrease voltage imbalance between the first power storage unit and the second power storage unit.

In some embodiments, the first power storage unit and the second power storage unit are paired to work together with a third power storage unit.

When the charging is performed, the first power storage charges the third power storage.

When the discharging is performed, the third power storage unit charges the second power storage unit.

In some embodiments, when the first power storage unit has a power storage level lower than a first threshold, the third power storage unit charges the first power storage, and the second power storage charges the third power storage unit.

In some embodiments, the charging and the discharging are performed alternatively over time.

In some embodiments, the control module includes a frequency control module.

The frequency control module performs a test for more than one set of frequencies to perform the charging and the discharging and detect corresponding performance.

An optimized set of frequency is used for performing the charging and the discharging after the test.

In some embodiments, the frequency control module adjusts the frequency control signals based on a optimized time-frequency variation table stored in a memory device coupled to the frequency control module.

In some embodiments, the power storage apparatus may also include a temperature sensor for detecting a component temperature of the power storage apparatus.

When the detected component temperature is larger than a threshold, the charing and the discharging is paused for a predetermined time period.

In some embodiments, the power storage apparatus may also include a fan.

When a charging current of the charging has a variation over a threshold, the frequency control module activates the fan to cool down the power storage apparatus.

In some embodiments, the power storage apparatus may also include a heater.

When a charging current of the charging has a variation over a threshold, the frequency control module activates the heater to increase working temperature of the power storage apparatus.

In some embodiments, the power storage apparatus is used in a vehicle power system and the frequency control module is integrated with a motor controller of the vehicle power system.

In some embodiments, a power storage apparatus includes multiple power storage units, a frequency control module and a switching module.

The multiple power storage units have varying storage levels during operation.

The frequency control module is used for generating multiple frequency control signals in response to an imbalance among the multiple power storage units.

The switching module is coupled to the multiple power storage units for dynamically performing a charging and a discharging of the multiple power storage units according to the frequency control signals to reduce the imbalances among the multiple power storage units adaptive to a temperature variation.

In some embodiments, among the multiple power storage units, when a first power storage unit of the multiple power storage units performs the charging, a second power storage unit of the multiple power units performs the discharging.

In some embodiments, the first power storage unit and the second power storage unit are paired to work together with a third power storage unit.

When the charging is performed, the first power storage charges the third power storage.

When the discharging is performed, the third power storage unit charges the second power storage unit.

In some embodiments, when the first power storage unit has a power storage level lower than a first threshold, the third power storage unit charges the first power storage, and the second power storage charges the third power storage unit.

In some embodiments, the charging and the discharging are performed alternatively over time.

In some embodiments, the frequency control module generates multiple PWM signals.

The switching module includes multiple transistors.

The multiple transistors are respectively coupled to different power storage devices.

The transistors are turned on or turned off according to the multiple PWM signals.

In some embodiments, the frequency control module includes a resonant circuit.

The resonant circuit includes an inductor and a capacitor.

In some embodiments, a sampling circuit is used detecting a charging current of the charging for a first timing and a second timing periodically.

The first timing and the second timing have a predetermined time delay.

In some embodiments, the first timing is aligned with a switching timing of the switching module.

The second timing has an offset less than 1000 nano seconds after the switching timing.

In some embodiments, a frequency difference among the multiple PWM signals is less than 10% of an average frequency of the multiple PWM signals.

In some embodiments, when there are two PWM signals, the two PWM signals respectively have duty ratios between 45% to 55%.

In some embodiments, the multiple power storage units have two power storage units as a pair.

In some embodiments, the multiple power storage units have more than three power storage units.

The frequency control module determines two power storage units with a largest power level offset to perform the charging and the discharging.

In some embodiments, the frequency control module performs a test for more than one set of frequencies to perform the charging and the discharging and detect corresponding performance.

An optimized set of frequency is used for performing the charging and the discharging after the test.

In some embodiments, the frequency control module adjusts the frequency control signals based on a optimized time-frequency variation table stored in a memory device coupled to the frequency control module.

In some embodiments, the power storage apparatus may also include a temperature sensor for detecting a component temperature of the power storage apparatus.

When the detected component temperature is larger than a threshold, the charging and the discharging is paused for a predetermined time period.

In some embodiments, the power storage apparatus may also include a fan.

When a charging current of the charging has a variation over a threshold, the frequency control module activates the fan to cool down the power storage apparatus.

In some embodiments, the power storage apparatus may also include a heater.

When a charging current of the charging has a variation over a threshold, the frequency control module activates the heater to increase working temperature of the power storage apparatus.

In some embodiments, the power storage apparatus is used in a vehicle power system and the frequency control module is integrated with a motor controller of the vehicle power system.

In some embodiments, a sensor detects the charging current of the charging to a statistics data for estimating a battery life of the power storage apparatus.

### BRIEF DESCRIPTION OF DRAWINGS

Fig. 1 illustrates an embodiment of a power storage apparatus control circuit.
Fig. 2 illustrates switching circuit timing diagram.
Fig. 3 illustrates a charging operation diagram.
Fig. 4 illustrates a discharging operation diagram.
Fig. 5 illustrates an experiment data of voltage variation.
Fig. 6 illustrates another experiment data of voltage variation.
Fig. 7 illustrates another experiment data of voltage variation.
Fig. 8 illustrates another experiment data of voltage variation.
Fig. 9 illustrates a frequency variation time diagram.
Fig. 10 illustrates another frequency variation time diagram.
Fig. 11 illustrates another frequency variation time diagram.
Fig. 12 illustrates another experiment data of voltage variation.
Fig. 13 illustrates anther experiment data of voltage variation.
Fig. 14 illustrates another embodiment of a power storage apparatus.
Fig. 15 illustrates another embodiment of a power storage apparatus.

### DETAILED DESCRIPTION

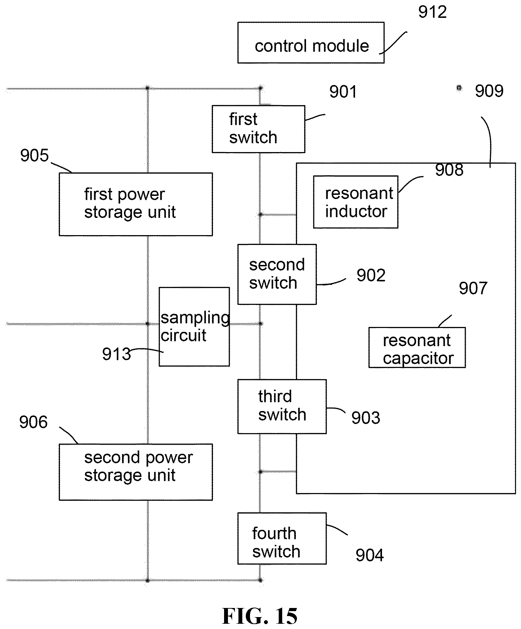

In Fig. 15, a power storage apparatus includes a first power storage unit 905, a second power storage unit 906, a resonant circuit 909, a first switch 901, a second switch 902, a third switch 903 and a fourth switch 904.

The first end of the first switch 901 is coupled to a first end of the first power storage unit 905.

The second end of the first switch 901 is coupled to a first end of the second switch 902 and is coupled to a first end of the resonant circuit 909.

The second end of the second switch 902 is coupled to a second end of the first power storage unit 905 and is coupled to a first end of the second power storage unit 906.

The first end of the third switch 903 is coupled to the first end of the second power storage unit 906 and is coupled to the second end of the second switch 902.

A second end of the third switch 903 is coupled to a first end of the fourth switch 901 and is coupled to a second end of the resonant circuit 909.

The second end of the fourth switch 904 is coupled to a second end of the second power storage unit 906.

In some embodiments, the first power storage unit 905 and the second power storage unit 906 are capacitors.

In some embodiments, the first switch 901, the second switch 902, the third switch 903, the fourth switch 904 and the resonant circuit 909 are used for balancing a voltage difference between the first power storage unit 905 and the second power storage unit 906.

In some embodiments, the power storage apparatus may also include a control module 912.

The control module 912 adjusts a switching frequency set of the first switch 901, the second switch 902, the third switch 903 and the fourth switch 904 according to a resonant frequency of the resonant circuit 909.

In some embodiments, the control module 912 controls duty ratios of the first switch 901 and the third switch 903 as 50%.

The control module 912 controls duty ratios of the second switch 902 and the fourth switch 904 as 50%.

In some embodiments, the control module 912 samples a resonant current when a switch signal of one of the first switch 901, the second switch 902, the third switch 903 and the fourth switch 904 is triggered as a first current.

In other words, the control module 912 samples a first current value when the switches are trigged to turn-on or turn-off.

The control module 912 further samples another resonant current when the switch signal of one of the first switch 901, the second switch 902, the third switch 903 and the fourth switch 904 after a predetermined time period after the switch signal is triggered as the second current.

After a time delay, e.g. 10 miliseconds after the first sampling, a second current value is sampled.

The control module 912 calculators a frequency compensation value by comparing the first current and the second current.

The frequency compensation value is used for adjust the switch frequency set of the first switch, the second switch, the third switch and the fourth switch.

In some embodiments, the control module 912 further subtracts the second current with the first current to get a sign of a current offset and multiplies the first current with the sign to obtain a target current.

The target current is supplied to a PI controller to get the frequency compensation value.

In some embodiments, a sampling circuit 913 is coupled between the first power storage unit 905 and the second power storage unit 906 for sampling the first current and the second current.

In some embodiments, the resonant circuit 909 includes a resonant inductor 908 and a resonant capacitor 907.

A first end of the resonant inductor 908 is coupled to the first end of the resonant circuit 909.

A second end of the resonant inductor 908 is coupled to a first end of the resonant capacitor 907.

A second end of the resonant capacitor 907 is coupled to the second end of the resonant circuit 909.

In some embodiments, the resonant inductor and the resonant capacitor are used for generating the resonant frequency of the resonant circuit.

In some embodiments, the first power storage unit and the second power storage unit are included in multiple power storage units.

When the first power storage unit performs a charging, the second power storage unit performs a discharging to decrease voltage imbalance between the first power storage unit and the second power storage unit.

In some embodiments, the first power storage unit and the second power storage unit are paired to work together with a third power storage unit.

When the charging is performed, the first power storage charges the third power storage.

When the discharging is performed, the third power storage unit charges the second power storage unit.

In some embodiments, when the first power storage unit has a power storage level lower than a first threshold, the third power storage unit charges the first power storage, and the second power storage charges the third power storage unit.

In some embodiments, the charging and the discharging are performed alternatively over time.

In some embodiments, the control module includes a frequency control module.

The frequency control module performs a test for more than one set of frequencies to perform the charging and the discharging and detect corresponding performance.

An optimized set of frequency is used for performing the charging and the discharging after the test.

In some embodiments, the frequency control module adjusts the frequency control signals based on a optimized time-frequency variation table stored in a memory device coupled to the frequency control module.

In some embodiments, the power storage apparatus may also include a temperature sensor for detecting a component temperature of the power storage apparatus.

When the detected component temperature is larger than a threshold, the charing and the discharging is paused for a predetermined time period.

In some embodiments, the power storage apparatus may also include a fan.

When a charging current of the charging has a variation over a threshold, the frequency control module activates the fan to cool down the power storage apparatus.

In some embodiments, the power storage apparatus may also include a heater.

When a charging current of the charging has a variation over a threshold, the frequency control module activates the heater to increase working temperature of the power storage apparatus.

In some embodiments, the power storage apparatus is used in a vehicle power system and the frequency control module is integrated with a motor controller of the vehicle power system.

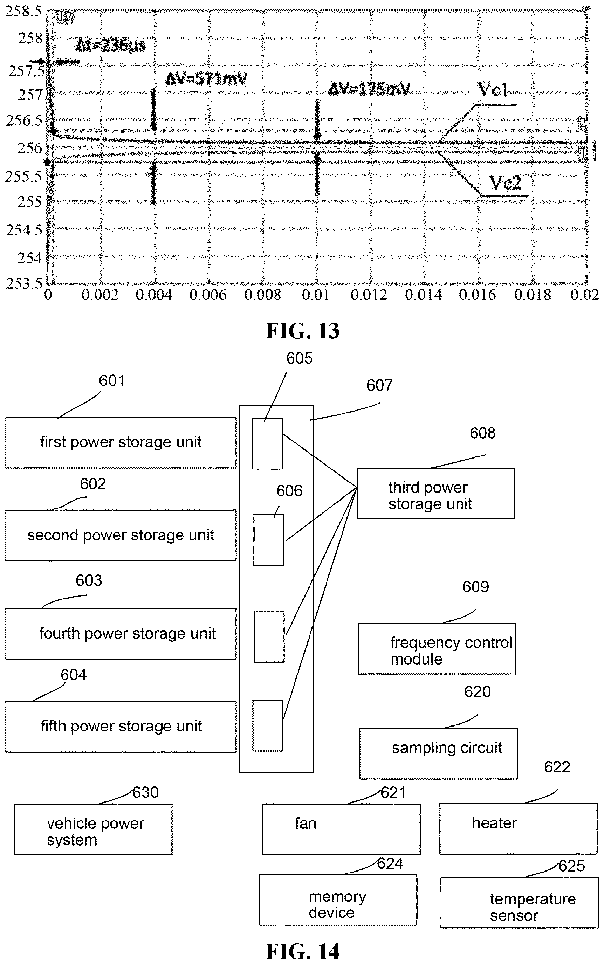

Please refer to Fig. 14. In Fig. 14, a power storage apparatus includes multiple power storage units, a frequency control module 609 and a switching module 607.

In this example, the power storage units include a first power storage unit 601, a second power storage unit 602, a fourth power storage unit 603, and a fifth power storage unit 604. The power storage units may be a battery for storing power and provide power to other components. The power storage units may be other forms of power storage devices like capacitors.

Power storage units are essential components in a wide array of applications, each with unique requirements and challenges. One common example is the lithium-ion battery, widely used in portable electronics such as smartphones, laptops, and tablets. These batteries are favored for their high energy density, which allows for longer usage times between charges, and their relatively low self-discharge rate. In such applications, the power storage unit needs to be compact yet powerful, balancing the device's energy requirements with the constraints of size and weight.

In electric vehicles (EVs), the power storage unit takes a more complex form, typically comprising a large array of lithium-ion cells. These cells are grouped into modules and packs to provide the high power and energy capacity necessary to drive the vehicle over extended distances. Here, the power storage unit is not just about energy density; it also needs to ensure safety, longevity, and reliability. Advanced battery management systems are employed to monitor and control each cell's state of charge, temperature, and voltage, ensuring optimal performance and safety.

For renewable energy systems, such as solar or wind power installations, power storage units play a crucial role in addressing the intermittency of power generation. In these applications, large-scale battery systems, such as lithium-ion batteries or flow batteries, are used to store excess energy generated during peak conditions. This stored energy can then be used during periods of low generation or high demand, helping to stabilize the grid and ensure a continuous supply of electricity.

In the realm of industrial applications, power storage units can take the form of high-capacity battery systems or capacitor banks. These are used in a range of applications, from providing emergency backup power in data centers and manufacturing facilities to powering heavy machinery. In these contexts, the power storage units must be robust, capable of delivering large amounts of power reliably, and able to withstand harsh operating conditions.

The multiple power storage units have varying storage levels during operation. Battery or other power storage units are dynamic systems whose power levels are influenced by a variety of factors, leading to variations in performance and efficiency over time. One primary factor is the state of charge (SOC), which represents the current energy level of the battery compared to its maximum capacity. The SOC can fluctuate based on usage patterns, such as the frequency and intensity of discharge cycles. For instance, in electric vehicles, aggressive driving or frequent use of high-demand features can lead to faster depletion of the battery's charge, affecting its available power level.

Temperature is another critical factor impacting the performance of power storage units. Most battery chemistries are sensitive to temperature changes. Extremely cold conditions can significantly reduce a battery's ability to deliver power, while excessive heat can accelerate chemical reactions inside the battery, potentially leading to reduced lifespan and efficiency. This is why many modern battery systems, especially in vehicles and large-scale energy storage, include thermal management systems to maintain optimal operating temperatures.

The age and health of the battery also play a significant role in determining its power levels. Over time, batteries undergo degradation due to chemical and physical changes within their cells. This aging process, exacerbated by factors such as deep discharging, overcharging, and high-temperature exposure, leads to a gradual decrease in the battery's maximum capacity and its ability to hold a charge, thereby affecting its power output.

The charging history of a battery can also influence its current power level. Frequent partial discharges and recharges, as opposed to full discharge cycles, can lead to a phenomenon known as the memory effect, particularly in nickel-cadmium batteries. This effect causes batteries to lose track of their full capacity, leading to reduced energy storage efficiency. Conversely, lithium-ion batteries, which are prevalent in many modern applications, are less prone to this issue and can handle more varied charging patterns.

The design and technology of the battery itself are fundamental in determining its power levels. Different battery chemistries, such as lithium-ion, lead-acid, or nickel-metal hydride, each have distinct characteristics in terms of energy density, power output, charging rates, and lifespan. Innovations in battery technology, including the development of solid-state batteries and advancements in electrode and electrolyte materials, continually redefine the capabilities and performance parameters of these power storage units.

Each of these factors - state of charge, temperature, aging, charging history, and battery technology - interact in complex ways to determine the real-time power levels of battery and other power storage units, highlighting the intricacies involved in their operation and management.

The frequency control module 609 is used for generating multiple frequency control signals in response to an imbalance among the multiple power storage units.

In the proposed power storage system, the frequency control module plays a crucial role in maintaining balance among the multiple power storage units. This module is specifically designed to generate multiple frequency control signals, which are essential for addressing any imbalances that arise within the system. When an imbalance is detected among the power storage units, be it in terms of voltage, state of charge, or capacity, the frequency control module responds by generating appropriate control signals. These signals are tailored to the specific needs of each unit, ensuring that the system operates harmoniously and efficiently.

The frequency control signals generated by the module are pivotal in regulating the charging and discharging cycles of the individual power storage units. By adjusting the frequency of these cycles, the module can effectively redistribute energy within the system. For instance, if one unit exhibits a lower state of charge compared to others, the frequency control module can increase the charging frequency for that particular unit while simultaneously adjusting the discharging frequency of the other units. This dynamic adjustment helps in achieving an equilibrium state among all the power storage units, optimizing the overall system performance.

The operation of the frequency control module is based on real-time data and sophisticated algorithms. It continuously monitors various parameters such as voltage, current, and temperature across each power storage unit. Using this data, the module calculates the degree of imbalance and generates frequency control signals accordingly. This continuous monitoring and responsive action ensure that the system adapts quickly to changing conditions, maintaining balance and preventing potential issues such as overcharging or deep discharging of the units.

The design of the frequency control module is such that it can handle a wide range of scenarios and configurations. Whether the power storage system comprises a small number of large units or a large number of smaller units, the module can effectively manage the interactions between them. Its ability to generate multiple, distinct frequency control signals simultaneously is key to this versatility, allowing for the tailored management of each unit based on its specific requirements and state.

Incorporating the frequency control module into the power storage system enhances not only the system's efficiency but also its longevity and safety. By ensuring that each power storage unit operates within its optimal parameters and that the overall system remains balanced, the module mitigates the risks of damage and wear that can arise from imbalances. This aspect of the design is particularly crucial in applications where reliability and safety are of paramount importance, such as in electric vehicles, renewable energy storage, and critical backup power systems. The frequency control module, therefore, represents a vital component of the power storage system, central to its effective and safe operation.

The switching module 607 is coupled to the multiple power storage units for dynamically performing a charging and a discharging of the multiple power storage units according to the frequency control signals generated by the frequency control module 609 to reduce the imbalances among the multiple power storage units adaptive to a temperature variation or other factors mentioned above.

The switching module 607 may include multiple transistors 605, 606 or other switching components that turn on or turn off desired paths to allow electrical power to pass through or not.

Switching components such as transistors are fundamental elements in modern electronic systems, including power systems. At their core, transistors function as electronic switches that can control large power flows using smaller control signals. This is achieved through their ability to amplify weak electrical signals to a level that can drive larger currents. A transistor typically has three terminals: the base, the collector, and the emitter. When a small voltage is applied to the base, it allows a larger current to flow between the collector and the emitter. This principle enables transistors to act as switches or amplifiers in various electronic circuits.

Transistors play a crucial role in power systems, particularly in controlling and regulating the flow of electrical energy. In these applications, they are often used in configurations such as MOSFETs (Metal-Oxide-Semiconductor Field-Effect Transistors) or IGBTs (Insulated-Gate Bipolar Transistors). These devices can switch on and off rapidly, controlling the current flow through power circuits with high efficiency and precision. This rapid switching capability is essential for tasks such as converting alternating current (AC) to direct current (DC), regulating voltage levels, and managing power distribution to different parts of a system.

The control of transistors in a power system is typically achieved through electronic control signals. These signals, often derived from sophisticated control circuits or microprocessors, are relatively small, especially when compared to the power levels they manage in the system. Despite their small size, these control signals can effectively determine the operational state of the transistors-either turning them on (allowing current to pass) or off (blocking the current). This control mechanism is integral in the design of power systems, enabling the dynamic management and distribution of electrical energy.

The ability of transistors to be controlled by small electronic signals allows for the design of complex and efficient power systems. In these systems, transistors are used to modulate power flow, manage energy storage, and protect against overcurrents and surges. Their application extends to various domains, from small-scale electronics to large industrial power control systems. The reliability and performance of these systems heavily rely on the proper functioning of transistors, highlighting their significance in modem electrical and electronic engineering.

The technique of rapidly switching on and off for charging and discharging plays a critical role in maintaining a stable and dynamically adjustable status in battery systems. This process, often managed by advanced power electronics and control algorithms, allows for precise control over the flow of electricity into and out of the battery, enhancing both the performance and longevity of the system.

By rapidly switching the charging and discharging states, the system can respond quickly to changes in demand or capacity. For instance, in situations where the energy demand suddenly increases, the system can immediately increase the discharge rate to meet this demand. Conversely, when energy is abundant (such as during peak solar generation), the system can switch to a charging state to store excess energy efficiently. This flexibility is crucial for applications like electric vehicles, where power requirements can change rapidly, or in renewable energy systems, where energy generation can be highly variable.

Moreover, this rapid switching capability allows for better management of the battery's state of charge, ensuring that it remains within an optimal range. This is important for preserving the battery's health and preventing scenarios like overcharging or deep discharging, which can significantly degrade the battery's lifespan. By keeping the battery within its ideal operating conditions, the system can maximize both its performance and its usable life.

Additionally, this method of dynamic control helps in mitigating thermal stress on the battery. Rapid and controlled charging and discharging can prevent excessive heat build-up, a common issue that affects battery performance and safety. Effective thermal management is especially critical in high-power applications, where the heat generated during rapid charge-discharge cycles can be substantial.

In some embodiments, among the multiple power storage units, when a first power storage unit of the multiple power storage units performs the charging, a second power storage unit of the multiple power units performs the discharging.

In some embodiments, the first power storage unit and the second power storage unit are paired to work together with a third power storage unit.

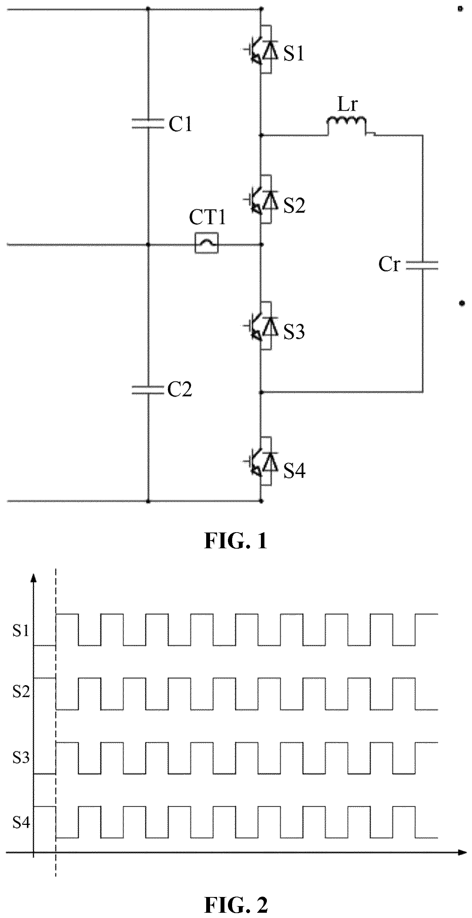

For example, Fig. 1 shows an example for pairing two power storage units together as a module.

Fig. 14 shows another example.

In Fig. 14, when the charging is performed, the first power storage unit 601 charges the third power storage 608.

When the discharging is performed, the third power storage unit 608 charges the second power storage unit 602.

In some embodiments, when the first power storage unit 601 has a power storage level lower than a first threshold, the third power storage unit 608 charges the first power storage unit 601, and the second power storage unit 602 charges the third power storage unit 608.

In some embodiments, the charging and the discharging are performed alternatively over time.

In some embodiments, the frequency control module generates multiple PWM signals. Pulse Width Modulation (PWM) is a technique that has become integral to modem electronic control systems. It involves varying the duty cycle of a pulse train, which is a series of on-and-off digital signals, to control the amount of power delivered to a device. The duty cycle refers to the proportion of time during which the signal is 'on' compared to its total cycle time. By adjusting the width of the 'on' pulses (the pulse width), PWM effectively controls the average power supplied to the load without changing the signal's frequency.

One of the key advantages of PWM is its energy efficiency. Because the power device (like a transistor) is either fully on or fully off during the switching process, it operates in the most efficient regions of its performance curve, minimizing the energy lost as heat. This is especially beneficial in applications like motor control, where PWM enables the precise control of motor speed with minimal energy loss. For instance, in an electric vehicle, PWM can be used to control the speed of the vehicle by modulating the power supplied to the electric motor.

Another advantage of PWM is its simplicity and ease of implementation. PWM signals can be generated using simple timer circuits in microcontrollers, which are ubiquitous in modem electronic devices. This makes PWM an economical and accessible solution for a wide range of applications. For example, in LED dimming, PWM is used to control the brightness of the LEDs. By varying the duty cycle of the PWM signal, the perceived brightness of the LED can be adjusted without changing the voltage or current passing through the LED.

PWM also finds extensive applications in power management. In devices like switch-mode power supplies (SMPS) and DC-DC converters, PWM is used to regulate the output voltage. By adjusting the duty cycle, these power supplies can efficiently convert one DC voltage to another, which is critical in battery-operated devices where power efficiency is paramount. This principle is also employed in solar charge controllers, where PWM is used to regulate the charging of batteries to prevent overcharging and extend battery life.

The switching module 605 includes multiple transistors 605, 606, as illustrated in the example of Fig. 14.

The multiple transistors are respectively coupled to different power storage devices.

The transistors are turned on or turned off according to the multiple PWM signals.

Pulse Width Modulation (PWM) as a control signal plays a pivotal role in the operation of transistors, particularly in power electronics. When applied to the gate of a transistor, a PWM signal can control the switching of large currents with remarkable precision and efficiency, despite being a relatively small signal itself.

A transistor, such as a MOSFET (Metal-Oxide-Semiconductor Field-Effect Transistor), operates essentially as an electronic switch. The gate of the transistor is the control terminal, which determines whether the transistor is in an 'on' (conducting) or 'off' (non-conducting) state. The unique characteristic of a MOSFET is that it requires very little current at the gate to control a much larger current between its source and drain terminals.

When a PWM signal is supplied to the gate, it rapidly switches the transistor between its 'on' and 'off' states. The duty cycle of the PWM signal - the proportion of time when the signal is high (on) versus low (off) - dictates how long the transistor stays in each state during each cycle. By adjusting the duty cycle, the effective average power conducted through the transistor can be precisely controlled.

For instance, if the PWM signal has a high duty cycle, the transistor will be 'on' for a larger proportion of the time, allowing more current to flow through it. Conversely, a low duty cycle means the transistor spends more time in the 'off' state, reducing the current flow. This ability to modulate the current flow with a small control signal makes PWM an ideal method for controlling power delivery in various applications.

The advantage of using a PWM signal to control a transistor is multifold. Firstly, it allows for very efficient power management because when the transistor is 'off', it consumes little to no power, and when it's 'on', it operates with minimal resistance and thus low power loss. Secondly, the transistor can be rapidly switched, allowing for precise control of power delivery to a load, whether it be a motor, an LED, or a power supply. This precise control is essential in applications requiring variable power levels, such as speed control in motors or brightness control in lighting systems.

In some embodiments, the frequency control module includes a resonant circuit.

The resonant circuit includes an inductor and a capacitor. A resonant circuit, which typically includes an inductor and a capacitor, is a foundational element in many electronic systems, particularly noted for its ability to oscillate at a specific frequency. This frequency, known as the resonant frequency, is determined by the values of the inductor (L) and capacitor (C) in the circuit. Engineers often exploit this characteristic to create circuits that can generate alternating switching signals at desired frequencies, which are crucial in various applications like radio transmitters, filters, and oscillators.

The fundamental principle behind a resonant circuit's operation lies in the energy exchange between the inductor and the capacitor. An inductor stores energy in a magnetic field when a current flows through it, while a capacitor stores energy in an electric field between its plates when a voltage is applied across it. In a resonant LC circuit, energy oscillates back and forth between the inductor's magnetic field and the capacitor's electric field. This oscillation occurs at the resonant frequency, which is determined by the formula that can be found in various text books and not to be repeated here for brevity.

Adjusting the parameters of the inductor or the capacitor can change the resonant frequency of the circuit. For example, increasing the inductance or the capacitance will lower the resonant frequency, and vice versa. This property is especially useful in tuning applications. For instance, in a radio receiver, varying the capacitance with a variable capacitor can change the resonant frequency of the circuit, allowing it to select different radio stations operating at different frequencies.

In practical applications, engineers often use resonant circuits to generate precise switching signals. For instance, in switch-mode power supplies (SMPS), a resonant circuit can be used to create a high-frequency switching signal that controls a power transistor. This high-frequency switching leads to improved efficiency and smaller component size, as it allows for smaller inductors and capacitors to be used. Similarly, in wireless charging systems, resonant circuits are used to create oscillating magnetic fields at specific frequencies to efficiently transfer power wirelessly.

Moreover, the quality of the resonance, often characterized by the Q factor (Quality factor) of the circuit, is also a critical consideration. A higher Q factor indicates a sharper peak in resonance, meaning the circuit is more selective to its resonant frequency. This is particularly important in applications like bandpass filters or RF amplifiers, where selectivity to a narrow band of frequencies is desired. In these applications, the Q factor can be optimized by choosing appropriate values for the inductor and capacitor, and by minimizing resistance in the circuit.

Fig. 1 shows an example of a frequency control module that includes an inductor and a capacitor.

In Fig. 14, a sampling circuit 620 is used detecting a charging current of the charging for a first timing and a second timing periodically.

The first timing and the second timing have a predetermined time delay, e.g. the second timing has an offset delay of 40ns after the first timing.

In some embodiments, the first timing is aligned with a switching timing of the switching module.

The second timing has an offset less than 1000 nano seconds after the switching timing.

In some embodiments, a frequency difference among the multiple PWM signals is less than 10% of an average frequency of the multiple PWM signals.

In some embodiments, when there are two PWM signals, the two PWM signals respectively have duty ratios between 45% to 55%.

In some embodiments, the multiple power storage units have two power storage units as a pair.

In some embodiments, the multiple power storage units have more than three power storage units.

The frequency control module determines two power storage units with a largest power level offset to perform the charging and the discharging.

The frequency control module plays a crucial role in managing and balancing the power levels between multiple power storage units within a system. Specifically, it identifies and addresses imbalances by focusing on the two units exhibiting the largest power level offset. This approach is vital in systems where maintaining equilibrium between various storage units is crucial for efficiency and longevity.

In practice, the frequency control module continuously monitors the power levels of each storage unit in the system. It calculates the difference or offset in power levels between these units. When it identifies two units with the most significant power level offset - meaning the greatest disparity in their state of charge or energy capacity - it flags these units for intervention. This identification is crucial, especially in scenarios where multiple batteries or capacitors are used in tandem, and their synchronized operation is essential for the system's overall performance.

Once the module determines the two units with the largest offset, it initiates a series of controlled charging and discharging cycles to rectify this imbalance. If one unit has a significantly higher charge than the other, the module will discharge the higher-charged unit while simultaneously charging the lower-charged one. This process is not abrupt but rather carefully managed through precise control signals that dictate the rate and duration of charging and discharging. The goal is to gradually bring the two units into a closer state of charge, thereby reducing the offset.

The criteria for triggering this balancing process are typically based on a predefined threshold. The frequency control module is programmed to detect when the power level offset between any two units exceeds this threshold, signaling a notable imbalance. This threshold is set based on factors like the specific requirements of the application, the characteristics of the storage units, and the desired level of system efficiency.

The balancing process orchestrated by the frequency control module is crucial for the health and efficiency of the power storage system. Imbalances between units can lead to issues such as reduced overall capacity, increased wear on certain units, and even system instabilities. By dynamically adjusting the charge states of the units with the largest offset, the system not only ensures more uniform usage and wear across all units but also optimizes its overall performance and longevity.

In some embodiments, the frequency control module performs a test for more than one set of frequencies to perform the charging and the discharging and detect corresponding performance.

In certain embodiments of power storage systems, the frequency control module is designed to conduct sophisticated tests using more than one set of frequencies for charging and discharging the power storage units. This approach is instrumental in identifying optimized parameters for the system, ensuring that it functions efficiently across different types of installations and operational conditions.

The rationale behind testing multiple frequency sets is to understand how the power storage units perform under various charging and discharging conditions. Each set of frequencies can induce different responses in the power storage units, affecting aspects like charge time, efficiency, heat generation, and overall battery health. By analyzing the performance under these different conditions, the frequency control module can determine the most effective frequency parameters for the given application. This optimization process is crucial for maximizing the efficiency and lifespan of the power storage units, as well as ensuring their safe operation.

Since power storage units may be installed in diverse systems - each with its unique operational demands - the ability to automatically adjust parameters is highly beneficial. For instance, a battery system in an electric vehicle may require different charging and discharging frequencies compared to a stationary energy storage system connected to a solar array. The frequency control module's testing allows it to adapt its operation to these differing requirements automatically.

The testing of different frequency sets can be conducted in various ways. In some cases, it might be done in the factory as part of the quality control and calibration process. Here, the units are subjected to different frequency conditions, and their performance data are used to set initial operating parameters. Alternatively, this testing can be implemented as an ongoing process within the operational environment. This could be periodic, where the system routinely tests different frequencies to ensure optimal performance over time, or it could be triggered by specific conditions or changes in the system's environment or usage patterns.

For example, if a power storage system is subjected to higher-than-usual loads or operates in a significantly altered temperature range, the frequency control module might initiate a test to reevaluate and adjust the charging and discharging frequencies. This adaptive approach ensures that the power storage system continues to operate optimally even as conditions change.

An optimized set of frequency is used for performing the charging and the discharging after the test.

In some embodiments, the frequency control module adjusts the frequency control signals based on a optimized time-frequency variation table stored in a memory device 624 coupled to the frequency control module.

In some embodiments, the power storage apparatus may also include a temperature sensor 625 for detecting a component temperature of the power storage apparatus.

When the detected component temperature is larger than a threshold, the charging and the discharging is paused for a predetermined time period.

In some embodiments, the power storage apparatus may also include a fan 621.

When a charging current of the charging has a variation over a threshold, the frequency control module activates the fan to cool down the power storage apparatus.

In some embodiments, the power storage apparatus may also include a heater 622.

When a charging current of the charging has a variation over a threshold, the frequency control module activates the heater to increase working temperature of the power storage apparatus.

In some embodiments, the power storage apparatus is used in a vehicle power system and the frequency control module is integrated with a motor controller of the vehicle power system 630.

In some embodiments, a sensor detects the charging current of the charging to a statistics data for estimating a battery life of the power storage apparatus.

Now, please refer to Fig. 1 to Fig. 13, which illustrate another embodiment that use two power storage units as an example to show how to use a frequency control module that is composed of an inductor and a capacitor while the switching module includes multiple transistors.

The embodiment provides a detailed exploration of a voltage balancing circuit, with Fig. 1 illustrating the core circuit diagram. This foundational layout sets the stage for understanding the intricate workings of the circuit's components and their interplay. Building upon this, Fig. 2 delves into the waveform diagram of the switching signals for each switch tube within the circuit. This representation is crucial for comprehending how the circuit manages the switching processes, a key aspect of its operation.

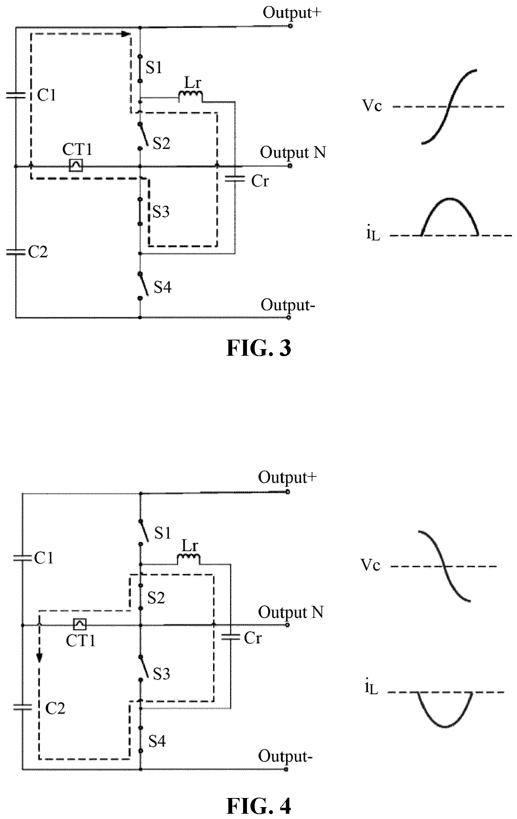

Furthering the examination, Fig. 3 and Fig. 4 offer schematic diagrams of the resonant circuit under different operational states. Fig. 3 showcases the circuit configuration when switches S 1 and S3 are active, and S2 and S4 are inactive, providing insights into the flow and control of the current in this state. Conversely, Fig. 4 flips this scenario, depicting the circuit's behavior when S 1 and S3 are inactive, and S2 and S4 are engaged, highlighting the circuit's versatility in handling different switching states.

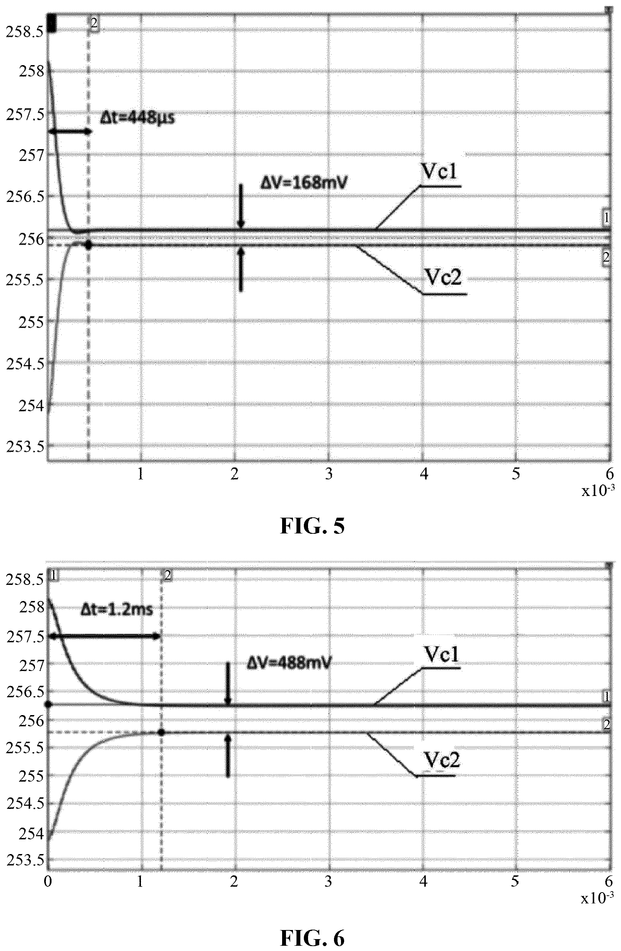

The embodiment also includes an analysis of capacitor voltage behaviors under various conditions, illustrated through a series of waveform diagrams. Fig. 5, Fig. 6, Fig. 7, and Fig. 8 each present these voltage behaviors under different duty cycle settings and switching frequencies. These figures are instrumental in demonstrating how changes in the duty cycle of switches S 1, S2, S3, and S4, along with alterations in the switching frequency (fsw), impact the voltage across the capacitors. This aspect is crucial for understanding the dynamics of voltage balancing in the circuit.

Fig. 1 presents a structural schematic diagram of a voltage balancing circuit as provided in an embodiment of this invention, specifically designed for use in power components. This circuit effectively integrates a first capacitor (C1) and a second capacitor (C2), connected in series between the positive and negative output ends of the power component.

The voltage balancing circuit comprises several key components: a first switch (S 1), a second switch (S2), a third switch (S3), a fourth switch (S4), a resonant unit, and a control module. The first end of switch S 1 connects to the first end of capacitor C1, while its second end links to both the first end of switch S2 and the first end of the resonant unit. The second end of switch S2 interconnects with the second end of capacitor C1, the first end of capacitor C2, and the first end of switch S3. Meanwhile, the second end of switch S3 connects to the first end of switch S4 and the second end of the resonant unit, with the second end of switch S4 connecting to the second end of capacitor C2.

In this particular embodiment, the power component could be a photovoltaic array or a DC conversion circuit, among others. Notably, the connection point between the first and second capacitors is linked to the neutral line.

A possible configuration of the voltage balancing circuit also includes a control module. This module is programmed to adjust the switching frequencies of switches S 1, S2, S3, and S4, based on the resonant frequency of the resonant unit. It is worth noting that in this embodiment, the switching signals for switches S1 and S3 are synchronized, as are the signals for switches S2 and S4. Furthermore, switches S 1 and S2 are designed to conduct complementarily.

The circuit integrates two capacitors, C1 and C2, in a series configuration between the positive and negative output ends of a power component. This setup is particularly useful in applications requiring precise voltage regulation, such as in photovoltaic arrays or DC conversion circuits in renewable energy systems.

The inclusion of four switches (S1, S2, S3, S4) and a resonant unit in the circuit is a strategic design choice. These switches are responsible for selectively connecting the capacitors to the resonant unit, enabling the circuit to dynamically balance the voltage across C1 and C2. This is crucial in scenarios where fluctuating power levels, like those seen in solar power applications, can lead to uneven charge distribution across the capacitors.

The resonant unit, typically comprising a combination of an inductor and a capacitor, is at the heart of this circuit's functionality. It facilitates energy transfer between C1 and C2, ensuring that voltage imbalances are quickly corrected. The control module's role in adjusting the switching frequencies of S1, S2, S3, and S4, based on the resonant frequency of this unit, cannot be overstated. This capability allows for fine-tuning the energy transfer process, enhancing the overall efficiency and stability of the power system.

The synchronization of the switching signals for S 1 and S3, as well as S2 and S4, is a critical aspect of the design. This synchronization ensures that the switches operate in a coordinated manner, preventing potential conflicts in the circuit's operation. Additionally, the complementary conduction of S1 and S2 optimizes the flow of current, reducing losses and improving the circuit's responsiveness to changing load conditions.

In practice, such a voltage balancing circuit could be applied in a variety of power systems where precise voltage control is paramount. For instance, in a battery management system of an electric vehicle, this circuit can effectively manage the charge levels across multiple battery cells, ensuring uniformity and prolonging the battery life. Similarly, in grid-tied solar inverters, this circuit can play a vital role in managing the DC link voltage, ensuring that the inverter operates efficiently and reliably under varying solar irradiation levels.

In another potential implementation, the control module is tasked with regulating the duty cycle for both switches S 1 and S3 to 50%, and similarly, for switches S2 and S4.

As depicted in Fig. 1, the resonant unit comprises a resonant inductor (Lr) and a resonant capacitor (Cr). The first end of the resonant inductor Lr connects to the first end of the resonant unit, while its second end connects to the first end of the resonant capacitor Cr. The second end of the resonant capacitor Cr then links back to the second end of the resonant unit.

As illustrated, the resonant unit is constructed using a series connection of an inductor and a capacitor. This configuration is advantageous during the quasi-resonance process, where the current drops to zero as the switch tube conducts or cuts off, thus achieving zero-current switching. This mechanism significantly mitigates the issue of high switching losses commonly found in voltage balancing circuits, thereby enhancing the system's overall balancing efficiency.

Specifically, when the voltage balancing circuit operates, it requires only two sets of complementary PWM signals for effective control, as shown in Fig. 2. The PWM signals for switches S1 and S3 are identical, as are those for switches S2 and S4, with the switching frequency being dependent on the resonant frequency of the resonant unit.

For instance, if the voltage of the first capacitor (Vc1) is higher than that of the second capacitor (Vc2), during the half-switching cycle where switches S 1 and S3 are conducting, the resonant unit connects to capacitor C1 through switches S1 and S3, placing the resonant network in a charging state, as shown in Fig. 3. Here, capacitor C1, resonant inductor Lr, and resonant capacitor Cr together form a resonant loop, with capacitor C1 charging the resonant capacitor Cr, causing an increase in voltage on Cr, ultimately reaching a peak, and the resonant current exhibiting a positive half-cycle sine wave change.

Conversely, during the half-switching cycle when switches S2 and S4 are conducting, the resonant network, connecting to capacitor C2 through switches S2 and S4, enters a discharging state, as depicted in Fig. 4. In this state, capacitor C2, resonant inductor Lr, and resonant capacitor Cr form a resonant loop, with the resonant capacitor Cr charging capacitor C2, leading to a decrease and eventual fall in voltage on Cr, and the resonant current undergoing a negative half-cycle sine wave change.

The continuous alternating between charging and discharging states in the resonant network is controlled by a pair of complementary driving signals, set at the resonant frequency with an approximate 50% duty cycle. This alternation enables energy transfer from the higher-voltage capacitor to the lower-voltage one, as demonstrated in Figs. 3 and 4. At the start and end of each switching cycle, the resonant current reaches zero, facilitating zero-current conduction and cut-off in the switch tube, effectively reducing switching losses.

In the embodiments of this invention, the structure of the resonant unit can vary, as shown in Fig. 1, to include other configurations such as LLC or LCC resonant circuits. This flexibility allows for adaptation to a wide range of application-specific requirements.

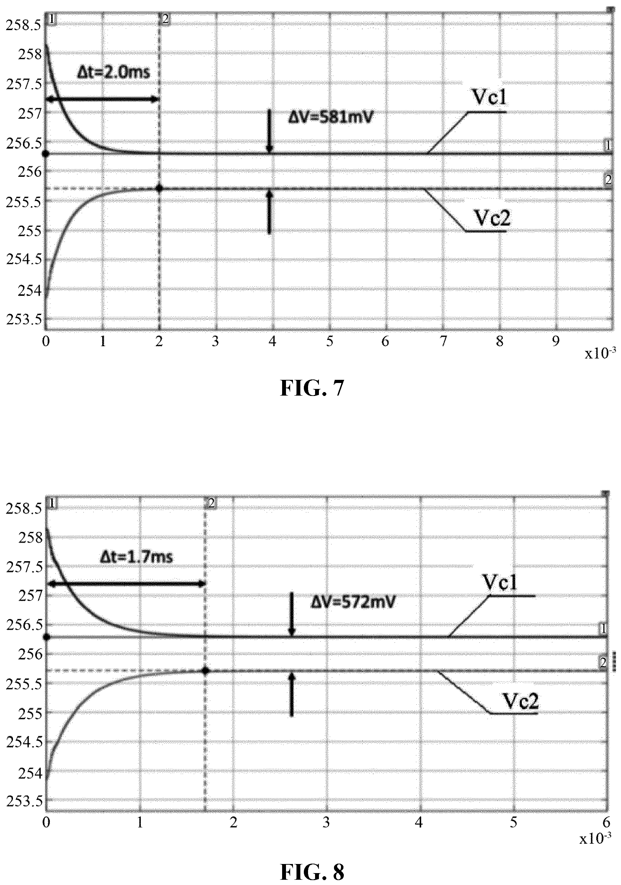

In a possible embodiment, the resonant unit of the voltage balancing circuit includes a resonant inductor and a resonant capacitor. The control module is also tasked with calculating the resonant frequency of the resonant unit based on these components. It then adjusts the switching frequency of the first switch (S 1), the second switch (S2), the third switch (S3), and the fourth switch (S4) to match this resonant frequency. This embodiment underwent MATLAB simulations to validate its design, with the simulation results aligning with the target objectives. The simulations were performed at a power level of 100 kW, and the results are depicted in Figs. 5 to 8. Fig. 5 shows the voltage waveform of the first and second capacitors (Vc1 and Vc2) when the switching frequency (fsw) equals the resonant frequency (fr), and the duty cycle of switches S1, S2, S3, and S4 is 50%. Fig. 6 displays the voltage waveform under the condition where fsw = fr, but the duty cycle of switches S1 and S3 is 20%, and that of switches S2 and S4 is 80%. Fig. 7 illustrates the voltage waveform when fsw = 0.8fr, with all switches having a 50% duty cycle. Fig. 8 shows the voltage waveform when fsw = 1.25fr, again with all switches at a 50% duty cycle.

These figures demonstrate that when the switching frequency matches the resonant frequency, and each switch maintains a 50% duty cycle, the bus capacitors can achieve balance more rapidly. Additionally, the switches can perform zero-current switching, resulting in lower losses. However, when the switching frequency does not align with the resonant frequency, the time taken for the bus capacitors to balance increases, and there is a higher steady-state error. When fsw = 1/Nfr (where N = 1, 2, 3, ...), the switches can still achieve zero-current switching. But when N > 1, for example, in the half cycle when switches S1 and S3 are conducting, the resonant current shows a decaying oscillatory waveform. This pattern, characterized by high current charging, low current discharging, followed by even lower current charging, extends the time it takes for the bus capacitors to balance. Hence, in this embodiment, the switching frequency is chosen to be equal to the resonant frequency.

To provide a more detailed understanding, let's consider a real-world application of this circuit design. In a renewable energy system, such as a solar power setup, maintaining a balanced voltage across the system's storage units is essential for optimal performance and longevity of the system. By precisely calculating the resonant frequency based on the resonant inductor and capacitor, and aligning the switching frequency of the switches with this resonant frequency, the system ensures effective energy transfer and minimizes losses.

The MATLAB simulation serves as a crucial step in validating this design approach. For instance, in the simulation represented in Fig. 6, the variation in duty cycles for switches S1/S3 and S2/S4 demonstrates the circuit's ability to adapt to different operational requirements, a feature that could be vital in scenarios where the solar irradiance varies throughout the day. Similarly, the conditions represented in Figs. 7 and 8 provide insights into the circuit's behavior under different frequency scenarios, crucial for designing a system that can adapt to various environmental conditions.

Therefore, this embodiment offers a robust solution for managing voltage balance in power systems, particularly in applications where efficiency and reliability are paramount. By aligning the switching frequency with the resonant frequency and judiciously controlling the duty cycle of the switches, the system can quickly and efficiently balance the voltage across its capacitors, ensuring optimal performance. This design principle can be applied across a range of applications, from renewable energy systems to electric vehicle power management, highlighting its versatility and effectiveness.

In one possible implementation of the system, the control module has an added function. It acquires the resonant current at the moment when the switching signal of a target switch transitions, considering this as the first current. The target switch can be any one of the four switches: the first switch (S 1), the second switch (S2), the third switch (S3), or the fourth switch (S4). Furthermore, the control module obtains a second current by collecting the resonant current at a target delay time, which is a predetermined time period after the switching signal of the target switch transitions.

Based on the magnitude relationship between the first current and the second current, the control module calculates a compensation value for the switching frequency. This compensation value is then added to the resonant frequency of the resonant unit to determine the switching frequency of the target switch. In another possible implementation, the control module also performs a calculation where the second current is subtracted from the first current to determine the current difference. The sign of this current difference is then obtained, and this sign is multiplied with the first current to derive a target current. This target current is then input into a PI controller to obtain the switching frequency compensation value.

In practice, due to temperature changes, the inductance of the resonant inductor and the capacitance of the resonant capacitor can deviate from their designed values. This deviation leads to a disparity between the actual switching frequency and the resonant frequency, affecting the efficiency of the switch's zero-current commutation and causing issues with temperature rise. As shown in Figs. 7 and 8, through simulation verification, it is evident that when the switching frequency does not equal the resonant frequency, the first capacitor voltage (Vc1) and the second capacitor voltage (Vc2) can still be adjusted to a balanced state. However, soft switching is not achieved, and as the difference between the switching frequency and the resonant frequency increases, the imbalance between the first and second capacitors also grows.

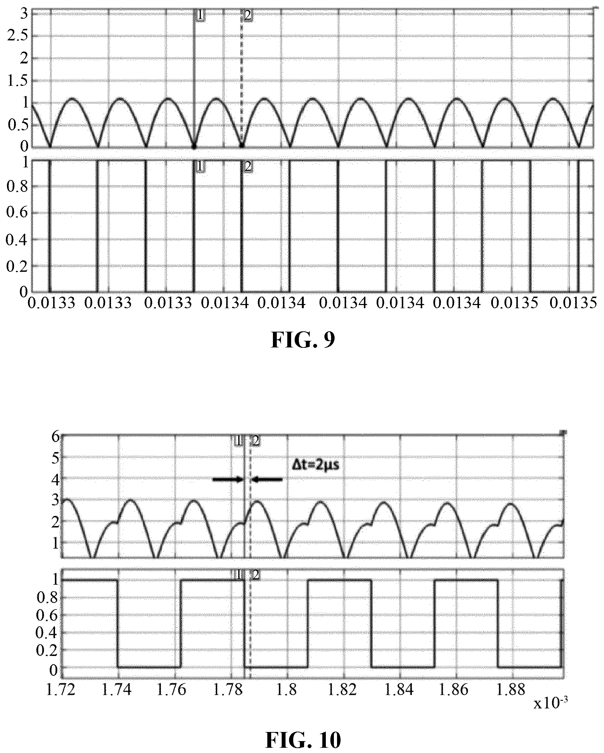

Fig. 9 illustrates the situation where the switching frequency equals the resonant frequency. In this figure, the upper curve represents the current curve of the resonant current after absolute value transformation, while the lower curve represents the drive signal of the first switch (S 1). As Fig. 9 shows, when the first switch (S1) and the third switch (S3) are closed (S2 and S4 are open), the resonant current is zero and starts to change in a sinusoidal manner. When the first switch (S1) and the third switch (S3) open (S2 and S4 close), the resonant current returns to zero and begins to change sinusoidally again until the first switch (S1) and the third switch (S3) close again (S2 and S4 open), at which point the resonant current is zero. As shown in Fig. 9, when the switching frequency equals the resonant frequency, the current at the switching moment CT1 is precisely zero.

When the switching frequency is less than the resonant frequency, the current in the inductor at the switching moment is not zero. Within the first cycle, when the first switch (S1) and the third switch (S3) are closed (S2 and S4 are open), the current in the resonant inductor is zero and begins to change sinusoidally. Because the switching period is longer than the resonant period, when the first switch (S1) and the third switch (S3) open (S2 and S4 close), the current in the resonant inductor has already become negative and continues in negative resonance. The waveform of the current after absolute value transformation is shown in Fig. 10, with the upper waveform representing the resonant current after absolute value transformation, and the lower waveform representing the switching signal.

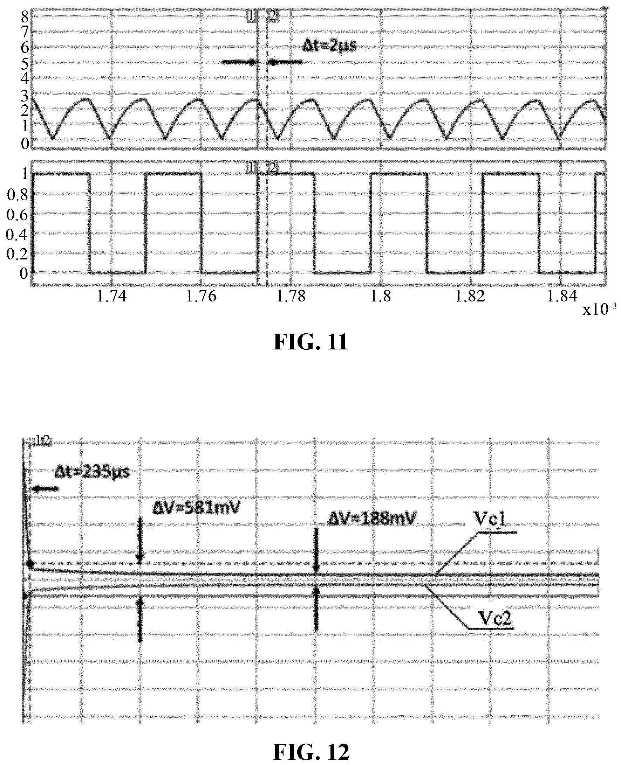

In situations where the switching frequency is greater than the resonant frequency, within the first cycle, when the first switch (S1) and the third switch (S3) are closed (S2 and S4 are open), the current in the resonant inductor is zero and begins to change sinusoidally. Because the switching period is shorter than the resonant period, when the first switch (S1) and the third switch (S3) open (S2 and S4 close), the current in the resonant inductor is still positive and continues in negative resonance. The waveform of the current after absolute value transformation, as shown in Fig. 11, has the upper waveform representing the resonant current after absolute value transformation and the lower waveform the switching signal.

In response to these situations, this embodiment provides a process for adjusting the switching frequency. It involves collecting resonant current at two sampling moments: one at the moment the switching signal transitions, and another at a predetermined time period after the transition. As can be deduced from Figs. 5 to 7 and the analysis above, when the switching frequency is less than the resonant frequency, the absolute value of the current sampled at the target delay moment is greater than the absolute value of the current at the moment of transition. Conversely, the absolute value of the current sampled at the target delay moment is less than the absolute value of the current at the moment of transition when the switching frequency is greater than the resonant frequency. Therefore, by comparing the magnitude of the resonant current at the target delay moment with that at the moment of transition, the relationship between the switching frequency and the actual resonant frequency can be determined, which in turn decides the direction of adjustment in the PI controller. The resonant frequency calculated based on the resonant inductor and resonant current is added as feedforward in the PI loop. The switching frequency compensation value output from the PI loop is used to adjust the calculated resonant frequency, determining the switching frequency of the switches. This adjusted switching frequency is then used to control each switch, adjusting the resonant current at the moment of transition to zero and achieving the objective of tracking the actual resonant frequency with the switching frequency.

In a possible implementation of this system, the preset time period, denoted as ΔT, is less than the inverse of the switching frequency (1/fsw). Here, ΔT represents the predetermined time period, and fsw indicates the switching frequency. In this embodiment, the transition edge triggering moments include both the rising edge triggering moment and the falling edge triggering moment. For instance, when the switching period is set to 2ms, the preset time period can be configured to 400ns.

This control method has been validated through MATLAB simulations, with the results showcased in Figs. 7, 8, 12, and 13. Based on the outcomes observed in Figs. 7 and 12, when the switching frequency is lower than the resonant frequency, closed-loop control reduces the voltage difference between the first and second capacitors from 581mV to 188m V. Moreover, the time taken to adjust the voltage difference to 580mV is reduced from 2ms to 235us. Additionally, after reaching a steady state, the switches are capable of achieving soft switching, thereby minimizing switching losses.

As indicated by Figs. 8 and 13, when the switching frequency is higher than the resonant frequency, closed-loop control reduces the voltage difference between the first and second capacitors from 572mV to 175m V. In this scenario, the time required to adjust the voltage difference to 570mV decreases from 1.7ms to 236us. Furthermore, after stabilizing, the switches can also achieve soft switching, which reduces switching losses.

The simulation results confirm that the switching frequency adjustment process proposed in this embodiment can effectively prevent poor voltage balancing adjustments due to changes in inductor and capacitor parameters. This process significantly reduces the voltage difference between the first and second capacitors and shortens the circuit's adjustment time, ultimately achieving soft switching in the switches and reducing circuit losses.

In another possible implementation, the voltage balancing circuit includes a current transformer, CT1, connected between the second end of the first capacitor and the second end of the second switch. This transformer is used for collecting the resonant current. Additionally, in a possible implementation, the target switch includes an insulated-gate bipolar transistor.

In a second aspect, an embodiment of the present invention provides a power source that includes the aforementioned voltage balancing circuit.

Expanding on these details, consider a practical scenario in a power system with variable loads, where maintaining a precise voltage balance is crucial. The system's ability to adjust the switching frequency based on the resonant current's parameters is vital. For example, in a renewable energy system, fluctuations in power generation could lead to imbalances in the voltage across capacitors. The implementation of the ΔT parameter being less than 1/fsw helps ensure that the control module can react quickly to these changes, thus maintaining an efficient and stable operation.

The significance of MATLAB simulations in this context cannot be overstated. They provide empirical evidence to back the theoretical models, ensuring that the system's design is not only theoretically sound but also practically viable. For instance, in renewable energy applications, where the reliability and efficiency of power conversion are paramount, the ability to reduce voltage differences efficiently and achieve soft switching can lead to significant improvements in overall system performance.

The inclusion of a current transformer, CT1, is another strategic design choice, especially in systems where accurate monitoring of the resonant current is essential for maintaining voltage balance. The use of an insulated-gate bipolar transistor as a target switch also highlights the system's capability to handle high-power applications with efficiency and reliability.

Finally, the implementation of such a voltage balancing circuit in a power source, as described, underscores its versatility and adaptability. This could be particularly advantageous in power systems requiring high precision and efficiency, such as in advanced industrial machinery or in grid-tied renewable energy systems. The ability to fine-tune the voltage balancing process and ensure consistent operation under varying conditions demonstrates the robustness of this design approach.

Additionally, the embodiment provides a deeper understanding of the resonant current and switch signal behaviors through Fig. 9, Fig. 10, and Fig. 11. Each figure corresponds to different relationships between the switching frequency and the resonant frequency, offering a comprehensive view of the circuit's performance across various frequency scenarios. These diagrams are essential for grasping how the circuit responds to frequency changes, a key factor in its efficiency and effectiveness.

Lastly, the embodiment includes Fig. 12 and Fig. 13, which focus on the closed-loop bus voltage balancing control method. These figures detail the waveform diagrams of the first and second capacitor voltages under specific settings, illustrating the circuit's behavior in a controlled, feedback-driven environment. This analysis is pivotal in understanding how the circuit maintains voltage balance, ensuring stable operation under varying conditions.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A power storage apparatus, comprising:
a first power storage unit (601);
a second power storage unit (602);
a resonant circuit (909);
a first switch (901);
a second switch (902), wherein a first end of the first switch (901) is coupled to a first end of the first power storage unit (601), wherein a second end of the first switch (901) is coupled to a first end of the second switch (902) and is coupled to a first end of the resonant circuit (909), wherein a second end of the second switch (902) is coupled to a second end of the first power storage unit (601) and is coupled to a first end of the second power storage unit (602);
a third switch (903); and
a fourth switch (904), wherein a first end of the third switch (903) is coupled to the first end of the second power storage unit (602) and is coupled to the second end of the second switch (902), wherein a second end of the third switch (903) is coupled to a first end of the fourth switch (904) and is coupled to a second end of the resonant circuit (909), wherein the second end of the fourth switch (904) is coupled to a second end of the second power storage unit (602).

2. The power storage apparatus of claim 1 , wherein the first power storage unit (601) and the second power storage unit (602) are capacitors.

3. The power storage apparatus of claim 1 or 2, wherein the first switch (901), the second switch (902), the third switch (903), the fourth switch (904) and the resonant circuit (909) are used for balancing a voltage difference between the first power storage unit (601) and the second power storage unit (602).

4. The power storage apparatus of any one of claims 1-3, further comprising a control module (902), wherein the control module (902) adjusts a switching frequency set of the first switch (901), the second switch (902), the third switch (903) and the fourth switch (904) according to a resonant frequency of the resonant circuit (909).

5. The power storage apparatus of claim 4, wherein the control module (902) controls duty ratios of the first switch (901) and the third switch (903) as 50%, wherein the control module (902) controls duty ratios of the second switch (902) and the fourth switch (904) as 50%.

6. The power storage apparatus of claim 4 or 5, wherein the control module (902) samples a resonant current when a switch signal of one of the first switch (901), the second switch (902), the third switch (903) and the fourth switch (904) is triggered as a first current, wherein the control module (902) further samples another resonant current when the switch signal of one of the first switch (901), the second switch (902), the third switch (903) and the fourth switch (904) after a predetermined time period after the switch signal is triggered as the second current, wherein the control module (902) calculators a frequency compensation value by comparing the first current and the second current, wherein the frequency compensation value is used for adjust the switch frequency set of the first switch (901), the second switch (902), the third switch (903) and the fourth switch (904).

7. The power storage apparatus of claim 6, wherein the control module (902) further subtracts the second current with the first current to get a sign of a current offset and multiplies the first current with the sign to obtain a target current, wherein the target current is supplied to a PI controller to get the frequency compensation value, and/or wherein a sampling circuit is coupled between the first power storage unit (601) and the second power storage unit (602) for sampling the first current and the second current.

8. The power storage apparatus of any one of claims 1-7, wherein the resonant circuit (909) comprises a resonant inductor (908) and a resonant capacitor (907), wherein a first end of the resonant inductor (908) is coupled to the first end of the resonant circuit (909), wherein a second end of the resonant inductor (908) is coupled to a first end of the resonant capacitor (907), wherein a second end of the resonant capacitor (907) is coupled to the second end of the resonant circuit (909),
and wherein the resonant inductor (908) and the resonant capacitor (907) are used for generating the resonant frequency of the resonant circuit (909).

9. The power storage apparatus of any one of claims 1-8, wherein the first power storage unit (601) and the second power storage unit (602) are included in multiple power storage units, wherein when the first power storage unit (601) performs a charging, the second power storage unit (602) performs a discharging to decrease voltage imbalance between the first power storage unit (601) and the second power storage unit (602).

10. The power storage apparatus of claim 9, wherein the first power storage unit (601) and the second power storage unit (602) are paired to work together with a third power storage unit, wherein when the charging is performed, the first power storage charges the third power storage, wherein when the discharging is performed, the third power storage unit charges the second power storage unit (602), wherein when the first power storage unit (601) has a power storage level lower than a first threshold, the third power storage unit charges the first power storage, and the second power storage charges the third power storage unit, and wherein the charging and the discharging are performed alternatively over time.

11. The power storage apparatus of claim 9 or 10, wherein the control module (902) comprises a frequency control module (902), wherein the frequency control module (902) performs a test for more than one set of frequencies to perform the charging and the discharging and detect corresponding performance, wherein an optimized set of frequency is used for performing the charging and the discharging after the test.

12. The power storage apparatus of claim 11, wherein the frequency control module (902) adjusts the frequency control signals based on a optimized time-frequency variation table stored in a memory device coupled to the frequency control module (902).

13. The power storage apparatus of claim 11 or 12, further comprising a temperature sensor (625) for detecting a component temperature of the power storage apparatus, wherein when the detected component temperature is larger than a threshold, the charing and the discharging is paused for a predetermined time period.

14. The power storage apparatus of any one of claims 11-13, further comprising at least one of a fan (621) or a heater (622), wherein when a charging current of the charging has a variation over a threshold, the frequency control module (902) activates the fan to cool down the power storage apparatus, and when a charging current of the charging has a variation over a threshold, the frequency control module (902) activates the heater to increase working temperature of the power storage apparatus.

15. The power storage apparatus of claim 9, wherein the power storage apparatus is used in a vehicle power system and the frequency control module (902) is integrated with a motor controller of the vehicle power system.
